# EUROPEAN PATENT SPECIFICATION

(11) **EP 0 538 206 B1**
(45) Date of publication and mention of the grant of the patent: **04.09.1996**
(21) Application number: 92830554.9
(22) Date of filing: 01.10.1992
(51) Int. Cl.: B23D 21/00, F16L 55/10

(54) **A remotely controlled apparatus for the sealing and cutting of internally contaminated pipes**
Ferngesteuertes Gerät zum Abdichten und Schneiden von Rohren, die innen kontaminiert sind
Appareil à commande à distance pour couper et fermer des tuyaux contaminés à l'intérieur

(30) Priority: 02.10.1991 IT RM910740
(43) Date of publication of application: 21.04.1993
(73) Proprietor: Ente per le nuove tecnologie, l'energia e l'ambiente ( ENEA), I-00198 Roma (IT); FINMECCANICA S.p.A., I-16128 Genova (IT)
(72) Inventor: Conti, Mario, I-01013 Vetrella VT (IT); Cai, Giulio, I-16161 Genova GE (IT)
(74) Representative: Tonon, Gilberto

(56) References cited:
- EP-A- 0 091 350
- EP-A- 0 261 294
- GB-A- 658 598
- US-A- 2 776 473
- US-A- 3 263 465
- DATABASE WPIL Section Ch, Week 8738, Derwent Publications Ltd., London, GB; Class K05, AN 87-269023/38 & JP-A-62189 000 (HITACHI KK) 18 August 1987
- DATABASE WPIL Section Ch, Week 8651, Derwent Publications Ltd., London, GB; Class K07, AN 86-336691/51 & JP-A-61 253 497 (MITSUBISHI HEAVY IND KK) 11 November 1986
- PATENT ABSTRACTS OF JAPAN vol. 10, no. 105 (M-471)(2162) 19 April 1986& JP-A-60 23 818 ( TOKYO GAS K.K. ) 27 November 1985

## Description

The present invention relates to a remotely controlled apparatus capable of sealing and cutting pipes with a relatively small diameter according to the precharacterising part of claim 1; see JP-A-62 189 000.

When dismantling high risk plants, for example nuclear plants, in particular those relating to the fuel cycle, or chemical plants wherein toxic substances have been handled, and likewise when performing special maintenance in said plants, particular importance is given to the removal of pipes containing contaminating or noxious substances.

Up to date, in order to perform the operation mentioned above, the available techniques included either high temperature methods, such as cutting with a plasma torch or oxygen torch, or mechanical methods, such as cutting with saws, shears or by abrasion using mills; none of said methods however provided for the sealing of both the section of pipe to be removed and the one remaining on site, thus creating two types of problem:
- dispersion into the surrounding environment of the contaminating elements present inside the pipes;
- the need for human presence in the vicinity of the work point, with the risk of contamination and/or radiation.

An object of the present invention is therefore to overcome the above mentioned deficiencies in the prior art, by supplying an apparatus which can be remotely controlled and which is capable of performing the cutting of the pipes to be removed from said high risk plants, after sealing of the pipes themselves so as to confine the contaminated substances inside said pipes. This object is achieved by an apparatus having the features of claim 1.

Generally speaking, the apparatus according to the present invention, which is conceived for use in the operations of dismantling and special maintenance of the high risk plants mentioned above, requiring the removal or replacement of pipes, with the aim of favouring optimal working conditions through remote control of said operations and containment of the contamination, comprises a working head, associated to a system for movement thereof, said head being capable of grasping a pipe, squashing it, forming two end portions sealed by permanent set of the material and finally performing the cutting. The apparatus in question is capable of avoiding spread of contamination and of allowing the easy removal of the pipes in question, thus greatly reducing the risk for personnel working in hostile environments.

The present invention will be better illustrated herebelow with reference to the description of a preferred embodiment thereof, given as a non-limiting example, and with reference to the enclosed drawings, in which:
figure 1 is a schematic side elevation view of the apparatus in question as a whole;
figure 2 is a schematic side elevation view, in an enlarged scale, of the working head group of the apparatus according to figure 1; and
figures 3, 4, 5, 6 are schematic cross-section views and schematic views from above of the working head, partially shown, respectively, of the apparatus according to figure 1, during the successive operations of gripping, squashing, sealing and cutting of a pipe to be removed.

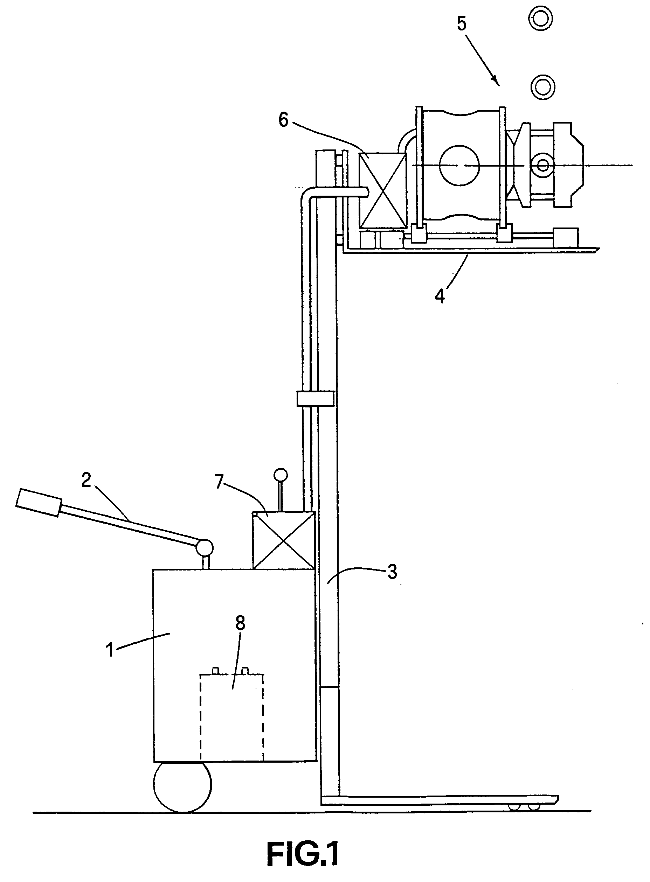

With reference to figure 1, the apparatus according to the present invention is schematically shown therein as a whole, comprising a lift truck 1 provided with wheels, said truck being controlled by an operator by means of a command bar 2, integral at the front with a vertical rod 3 along which a support 4 moves vertically. The support supports a working head, generally indicated with 5, which will be described in greater detail hereinafter, and which is connected to a hydraulic control unit 6, which is in turn connected to a command and control system 7 on the truck 1, which can be activated by the operator, power being supplied by an electrical storage battery system 8 located inside the truck 1, so as to allow the system for the movement of the working head to be independent of that for movement of the truck 1.

With the arrangement described above, by moving the truck 1 the working head can be moved along the axes x, y and z of a cartesian system, thus allowing the working head 5 to be moved up to, and roughly positioned with respect to a pipe to be cut, while the exact finally positioning is performed by means of the hydraulic control unit 6 and the command and control system 7, moving the working head 5 on the support 4 along the axes x and y, as will be described below.

It must immediately be underlined that the system for moving the working head, instead of being formed by the truck 1, can be made up of any other system capable of performing said movement along said axes x, y and z of the support 4 of the working head itself, such as, for example, an extending arm or the like.

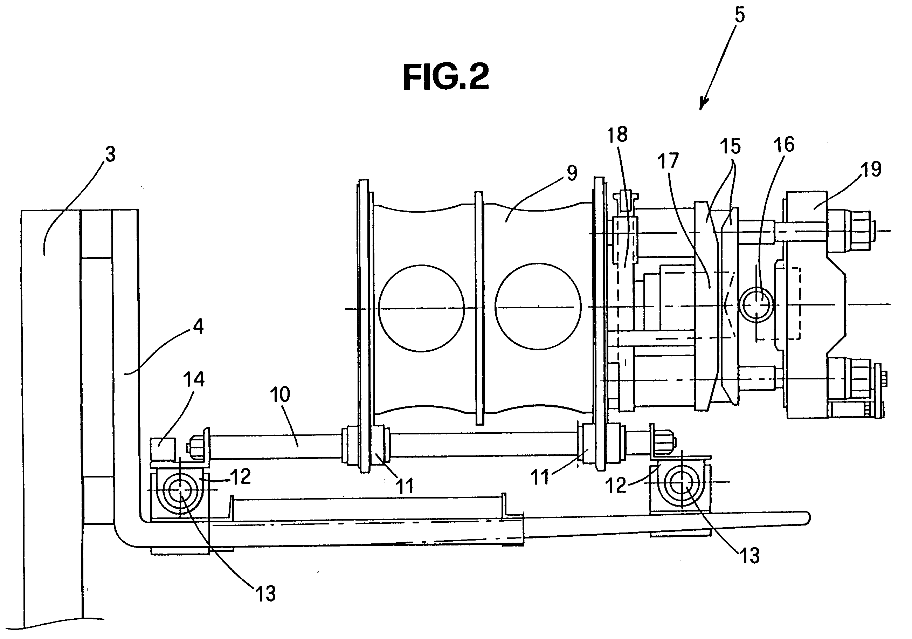

With reference to figure 2, the working head 5 is schematically shown therein as a whole, with the exclusion of the hydraulic control unit 6 shown in figure 1, installed on the support 4 which is vertically mobile along the vertical rod 3, partially shown, of the truck 1, not shown.

The working head 5 comprises a support frame 9, which is supported in a sliding manner on two spaced parallel longitudinal shafts, of which only one is visible in figure 2 and indicated with 10, by means of respective pairs of lower bushings 11. Each end of the shafts 10 is integral with a bushing 12 sliding along a respective transversal shaft 13.

The arrangement given above allows said movement of the working head 5 along the axes x and y for an exact positioning of said head with respect to the pipe in question, said movement being performed by means of hydraulic jacks, of which only one is schematically shown and indicated with 14, connected to the control unit 6.

From the front of the support frame 9 integrally extends the group of tools for performing in sequence the operations to be carried out on the pipe to be removed, including a punch and wedge group 15 for squashing and subsequently sealing said pipe, indicated here with 16, a blade 17, associated with a counterplate 18 for cutting of said sealed pipe, an end plate 19 capable of rotating around one of its ends to allow positioning and subsequent locking, with return to the starting position, of the pipe 16 between said end plate and the tools described above.

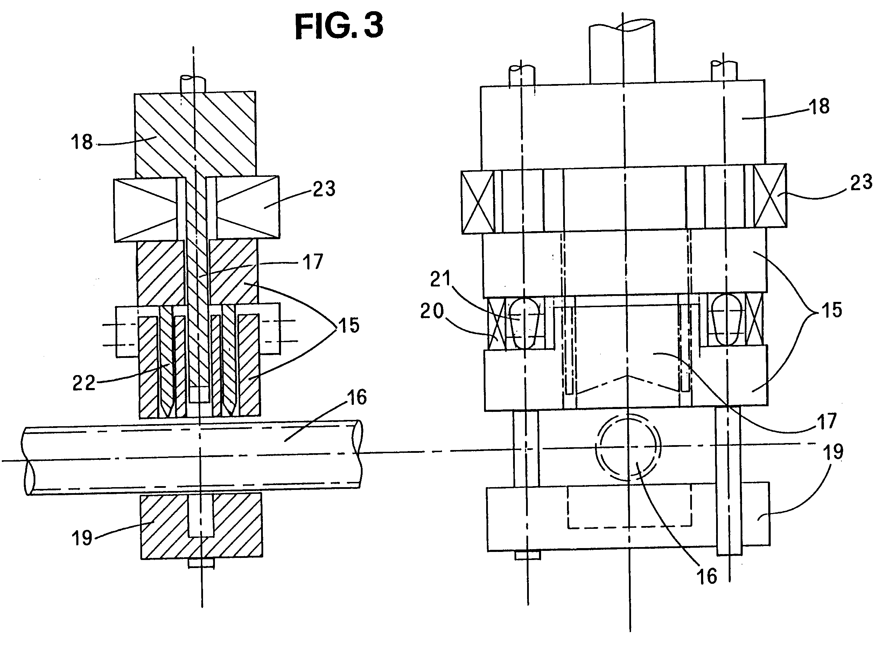

Given that actuation of the various components of the working head 5 takes place by means of hydraulic jacks, although these are not shown, all connected to the control unit 6, a description will now be given, with reference to figures 3, 4, 5 and 6, containing more structural details of the working of the apparatus according to the present invention.

It must also be noted that in the above mentioned figures the components which have already been mentioned in precedence will be indicated using the same reference numerals.

In operation, the working head 5 of the apparatus according to the present invention is first of all brought into a position close to the pipe 16 to be cut, by moving the lift truck 1 along the cartesian axes x, y and z, said movement being carried out by the operator who has at his disposal the command and control system 7 for performing all the operations required by means of the hydraulic control unit 6 shown in figure 1.

With the working head 5 thus roughly positioned with respect to the pipe 16 to be removed, and after rotation of the end plate 19 in the direction of the aperture, the final positioning of the working head 5 itself takes place, either visually, or with the aid of a TV camera suitably placed on the support 4 and of a monitor situated on the truck 1 (neither of which is shown). Said final positioning takes place by the movement of the working head on the support 4 along the cartesian axes x and y, the head being made to slide along the shafts 10 and 13, respectively, by means of the bushings 11 and 12, until it is placed in such a way so that the pipe 16 is in contact with the punch group 15, as shown in figure 3.

At this point the apparatus according to the present invention is positioned and ready to perform the operations of squashing, sealing and cutting the pipe 16.

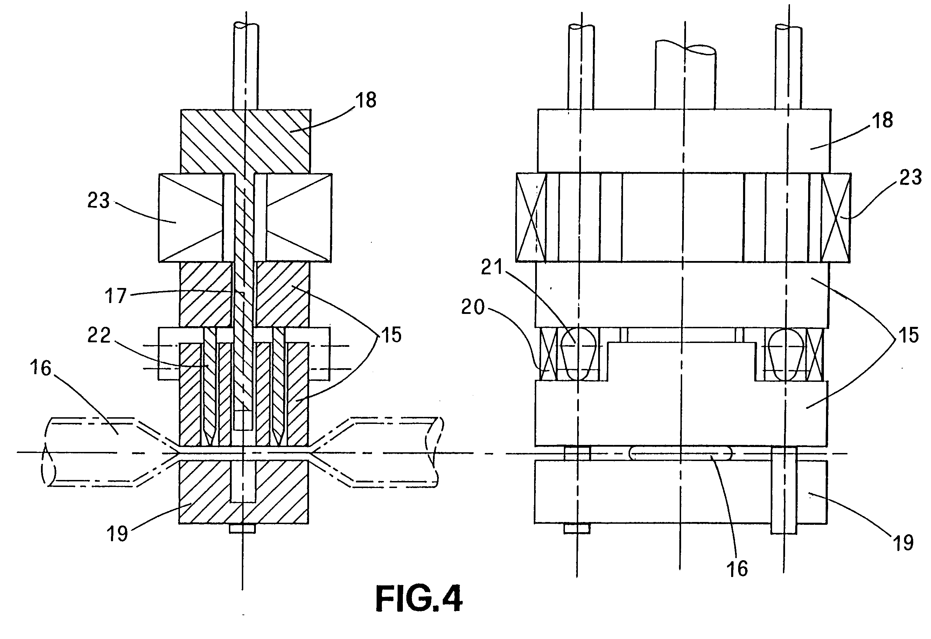

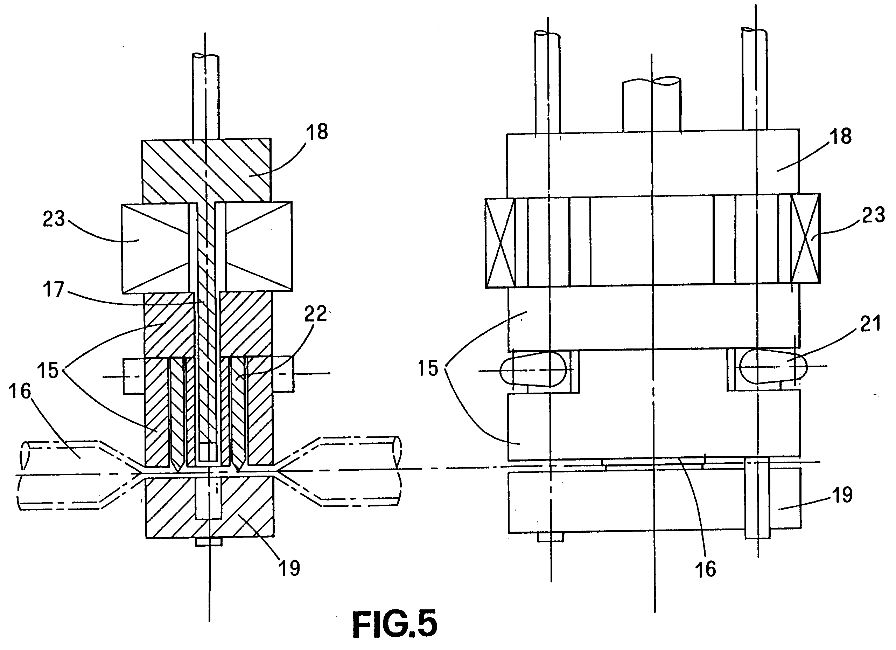

As shown in figure 4, the punch group 15 is first actuated, providing for the squashing of the pipe 16, then, by reducing the pressure in the hydraulic circuit by means of the command and control system 7, a pair of elastic spacers 20, for example made of rubber, forming part of the punch group 15 and compressed during the squashing stage, are allowed to expand again in such a way as to allow rotation of the cam wheels 21 from the position shown in figure 4 to that shown in figure 5, consequently freeing a pair of wedges 22 which, as shown in the latter figure, following a subsequent increase in pressure in the hydraulic circuit and the consequent re-actuation of the punch group 15, are forced against the squashed pipe 16 so as to seal it by cold permanent setting at two points separated from each other.

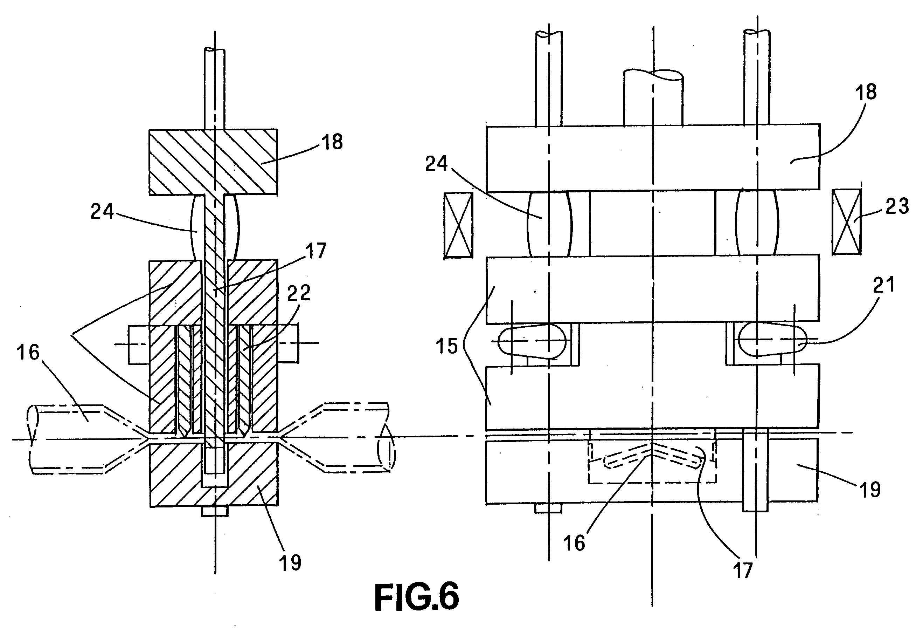

Finally, as schematically shown in figure 6, a pair of spacers 23 are removed so as to free the counterplate 18, which advances, causing deformation of a pair of elastic return spacers 24, until pressing the blade 17 to which it is connected against the pipe 16 until cutting it at a point between the above mentioned two sealed points.

On completion of the latter operation, the original position of the tools on the working head 5 is resumed, the end plate 19 is made to rotate in the direction of the opening so as to allow the apparatus to detach from the pipe 16 which has been treated, and to be positioned, as described above, in another section of the pipe 16, where the operations described above are repeated in sequence.

It is thus possible to obtain transportable sections of pipe, sealed at both ends, while the sections of pipe remaining on site are also sealed at their respective ends.

It must be underlined that the group of tools on the working head 5 is capable of being rotated on its axis so as to allow operation on both horizontal and vertical pipes.

It must furthermore be underlined that, although in the present embodiment operation of the hydraulic control unit 6 actuating the tools on the working head 5 is performed manually by the operator, by means of the command and control system 7 on the truck 1, said operation can be remotely controlled, for example using radio control.

The present invention is not limited to the embodiment described, but includes without departing the scope of the claims any variations thereof.

## Claims

1. A remote controlled apparatus for sealing and cutting internally contaminated pipes, comprising: means (1) for moving the apparatus; a working head (5) supported by said means for moving (1) and comprising means for gripping (19), squashing (15), sealing (22) and cutting (17) said pipes (16); and means for the actuation of said means forming said working head (5), said apparatus being characterized in that said means for sealing the pipe (16) comprise two wedges (22) associated to a punch group (15) and apt to seal by cold permanent setting a previously squashed section of said pipe at two points separated from each other, and
said means for cutting the pipe (16) comprise a blade (17) apt to cut said pipe at a point between said two sealed points, and in that it comprises means for the remote control and command of said actuation means.

2. An apparatus according to claim 1, characterized in that said means for the remote control and command of said actuation means comprise manual controls (7) on said means for moving (1), apt to actuate a control unit (6) connected to said actuation means.

3. An apparatus according to claim 1, characterized in that said means for the remote control and command of said actuation means comprise a radio-control, apt to actuate a control unit (6) connected with said actuation means.

4. An apparatus according to one or more of claim 1 to 3, characterized in that said means for squashing the pipe (16) comprise a punch group (15).

5. An apparatus according one or more of claims 1 to 4, characterized in that said means for moving are formed by a lift truck (1), movable along cartesian axes x,y,z.

6. An apparatus according to one or more of claims 1 to 4 characterized in that said means for moving (1) are formed by an extending arm, movable along cartesian axes x, y,z.

7. An apparatus according to one or more of the preceding claims, characterized in that said means for actuation of said component means of the working head (5) comprise hydraulic jacks.

8. An apparatus according to one or more of the preceding claims, characterized in that said means for gripping the pipe (16) comprise a pivoted plate (19), and means (9, 10, 11, 12, 13, 14) for moving said working head (5) along cartesian axes x, y.

## Patentansprüche

1. Ferngesteuerte Vorrichtung zum Abdichten und Schneiden von innen kontaminierten Rohren, umfassend: eine Einrichtung (1) zum Bewegen der Vorrichtung; einen Arbeitskopf (5), der von der genannten Einrichtung zum Bewegen (1) gehalten ist und eine Einrichtung zum Ergreifen (19), Zusammendrücken (15), Abdichten (22) und Schneiden (17) der genannten Rohre (16) umfaßt; und eine Einrichtung zum Betätigen der genannten Einrichtungen, die den genannten Arbeitskopf (5) bilden, wobei die genannte Vorrichtung **dadurch gekennzeichnet** ist, daß die genannte Einrichtung zum Abdichten des Rohres (16) zwei Keile (22) umfaßt, die mit einer Zusammendrückgruppe (15) verbunden sind und fähig sind, durch dauerhaftes Kaltverbinden einen vorhergehend zusammengedruckten Abschnittes des genannten Rohres an zwei voneinander getrennten Punkten abzudichten, und
die genannte Einrichtung zum Schneiden des Rohres (16) eine Klinge (17) umfaßt, die fähig ist, das genannte Rohr an einem Punkt zwischen den genannten zwei abgedichteten Punkten zu durchschneiden, und daß sie Mittel für die Fernsteuerung und zum Befehlen der genannten Betätigungseinrichtung umfaßt.

2. Eine Vorrichtung gemäß Anspruch 1, **dadurch gekennzeichnet**, daß die genannte Einrichtung zur Fernsteuerung und zum Befehlenen der genannten Betätigungseinrichtung Handsteuerungen (7) an der genannten Einrichtung zum Bewegen (1) umfaßt, die eine Steuerungseinheit (6) betätigen können, die mit der genannten Betätigungseinrichtung verbunden ist.

3. Eine Vorrichtung gemäß Anspruch 1, **dadurch gekennzeichnet**, daß die genannte Einrichtung zur Fernsteuerung und zum Befehlenen der genannten Betätigungseinrichtung eine Funksteuerung umfaßt, die eine Steuerungseinheit (6) betätigen können, die mit der genannten Betätigungseinrichtung verbunden ist.

4. Eine Vorrichtung gemäß einem oder mehreren der Ansprüche 1 bis 3, **dadurch gekennzeichnet**, daß die genannte Einrichtung zum Zusammendrücken des Rohrs (16) eine Zusammendrückgruppe (15) umfaßt.

5. Eine Vorrichtung gemäß einem oder mehreren der Ansprüche 1 bis 4, **dadurch gekennzeichnet**, daß die genannte Einrichtung zum Bewegen von einem Hubfahrzeug (1) gebildet ist, das entlang kartesianischer Achsen x, y, z bewegbar ist.

6. Eine Vorrichtung gemäß einem oder mehreren der Ansprüche 1 bis 4, **dadurch gekennzeichnet**, daß die genannte Einrichtung zum Bewegen (1) von einem sich erstreckenden Arm gebildet ist, der entlang kartesianischer Achsen x, y, z bewegbar ist.

7. Eine Vorrichtung gemäß einem oder mehreren der vorhergehenden Ansprüche, **dadurch gekennzeichnet**, daß die Einrichtung zum Betätigen der genannten Komponenteneinrichtungen des Arbeitskopfes (5) Preßköpfe umfaßt.

8. Eine Vorrichtung gemäß einem oder mehreren der vorhergehenden Ansprüche, **dadurch gekennzeichnet**, daß die genannte Einrichtung zum Ergreifen des Rohrs (16) eine verschwenkbare Platte (19) und Einrichtungen (9, 10, 11, 12, 13, 14) zum Bewegen des genannten Arbeitskopfes (5) entlang kartesianischer Achsen x, y umfaßt.

## Revendications

1. Appareil de commande à distance pour couper et fermer des tuyaux contaminés à l'intérieur, comprenant: des moyens (1) pour déplacer l'appareil; une tête de travail (5) montée sur ces moyens de déplacement (1) et comprenant des moyens pour la préhension (19), l'écrasement (9), l'isolement ou fermeture étanche (22) et la coupe (17) de ces tuyaux (16); et des moyens pour l'actionnement de ces moyens formant la tête de travail (5), l'appareil étant caractérisé en ce que des moyens d'isolement ou de fermeture étanche du tuyau (16) comprennent deux coins (22) associés à un groupe de poinçonnement (15) et aptes à isoler hermétiquement par positionnement permanent à froid une section préalablement écrasée du tuyau en deux points séparés l'un de l'autre, et
des moyens de coupe du tuyau (16) comprennent une lame (17) pouvant couper le tuyau en un point situé entre deux points isolés de façon étanche et en ce qu'ils comprennent des moyens de télécommande et des moyens d'actionnement.

2. Appareil selon la revendication 1, caractérisé en ce que les moyens de télécommande et les moyens d'actionnement comprennent des commandes manuelles (7) sur les moyens de déplacement (1) aptes à actionner une unité de commande (6) raccordée aux moyens d'actionnement.

3. Appareil selon la revendication 1, caractérisé en ce que les moyens de télécommande et les moyens d'actionnement comprennent une commande radio apte à actionner une unité de commande (6) raccordée aux moyens d'actionnement.

4. Appareil selon l'une ou plusieurs des revendication 1 à 3, caractérisé en ce que les moyens d'écrasement du tuyau (16) comprennent un groupe de poinçonnement (15).

5. Appareil selon l'une ou plusieurs des revendication 1 à 4, caractérisé en ce que les moyens de déplacement sont constitués d'un chariot élévateur (1), déplaçable le long des axes cartésiens x,y,z.

6. Appareil selon l'une ou plusieurs des revendication 1 à 4, caractérisé en ce que les moyens de déplacement (1) sont constitués par un bras extensible, se déplaçant le long des axes cartésiens x,y,z.

7. Appareil selon l'une ou plusieurs des revendication précédentes, caractérisé en ce que les moyens d'actionnement du composant de la tête de travail (5) comprennent des vérins hydrauliques.

8. Appareil selon l'une ou plusieurs des revendication précédentes, caractérisé en ce que les moyens de préhension du tuyau (6) comprennent une plaque pivotante (19) et des moyens (9,10,11,12,13,14) pour déplacer la tête de travail (5) le long des axes cartésiens x,y.
